# EUROPÄISCHE PATENTSCHRIFT

(11) **EP 4 031 340 B1**
(45) Veröffentlichungstag und Bekanntmachung des Hinweises auf die Patenterteilung: **17.04.2024**
(21) Anmeldenummer: 20775184.3
(22) Anmeldetag: 14.09.2020
(51) Int. Cl.: B28B 11/00, B28B 1/00, B33Y 10/00, B33Y 80/00, B41M 5/00, B44C 3/02, C04B 41/00, C04B 41/50, C04B 41/86, B28B 11/04, B41M 7/00, E04F 13/08, E04F 13/14

(54) **VERFAHREN ZUM ERZEUGEN EINES RELIEFARTIGEN DEKORS AUF EINER OBERFLÄCHE EINES KERAMISCHEN DRUCKMEDIUMS**
METHOD FOR PRODUCING A RELIEF-TYPE DECORATION ON A SURFACE OF A CERAMIC PRINTING MEDIUM
PROCÉDÉ POUR GÉNÉRER UN DÉCOR EN RELIEF SUR UNE SURFACE D'UN SUPPORT D'IMPRESSION CÉRAMIQUE

(30) Priorität: 20.09.2019 IT 201900016802
(43) Veröffentlichungstag der Anmeldung: 27.07.2022
(60) Teilanmeldung: 24020060.0
(73) Patentinhaber: Durst Group AG, 39042 Brixen (IT)
(72) Erfinder: OBERHUBER, Dennis, 39040 Vahrn (IT); WALDNER, Stefan, 39024 Mals (IT)
(74) Vertreter: Kempkens, Anke
(86) Internationale Anmeldenummer: PCT/EP2020/025414
(87) Internationale Veröffentlichungsnummer: WO 2021/052626

(56) Entgegenhaltungen:
- EP-A2- 2 189 272
- CN-A- 107 235 632
- CN-A- 108 527 625
- US-B2- 10 109 796

## Beschreibung

Die vorliegende Erfindung betrifft ein Verfahren zum Erzeugen eines reliefartigen Dekors auf einem Teil einer Oberfläche eines keramischen Druckmediums. Ferner betrifft die Erfindung ein mit einem gebrannten reliefartigen Dekor versehenes keramisches Druckmedium.

Aus dem Stand der Technik sind Verfahren zur Erzeugung einer dreidimensionalen Struktur auf keramischen Objekten mit einer Tropfen einer strukturbildenden Masse abgebenden Abgabevorrichtung bekannt.

In der EP 2 189 272 B1, die ein Verfahren zum Erzeugen eines reliefartigen Dekors auf einer Oberfläche eines keramischen Druckmediums nach dem Oberbegriff des Anspruchs 1 und ein gebranntes mit einem reliefartigen Dekor versehenes keramisches Druckmedium nach dem Oberbegriff des Anspruchs 11 offenbart, wird beispielsweise die Realisierung einer derartigen dreidimensionalen Struktur auf einer Oberfläche eines keramischen Objektes erzielt, indem Tropfen einer strukturbildenden Masse mit einer Abgabevorrichtung auf ein zuvor auf die Oberfläche bedrucktes ein- oder mehrfarbiges Motiv abgegeben werden während das Objekt in eine Förderrichtung bewegt wird, und zwar auf einer Weise, dass die dreidimensionale Struktur durch halbzylinderförmige Erhebungen zur Erzeugung optischer Effekte in Verbindung mit dem darunter liegenden Motiv gebildet werden, welche Erhebungen sich quer zur Förderrichtung des Objektes erstrecken.

Die Anordnung der oben beschriebenen halbzylinderförmigen Erhebungen weist den Nachteil auf, dass die Erhebungen nicht immer eine ausreichende gegenseitige seitliche Stabilisierung und somit nicht immer eine ausreichende Haftung an die damit bedeckte Oberfläche aufweisen, wenn das Objekt beispielsweise relativ kräftigen mechanischem Abrieb ausgesetzt wird.

Unter einem Zylinder wird im Folgenden ein Körper bezeichnet, der von einer Mantelfläche und von zwei gegenüberliegenden Schnittkreisflächen eingeschlossen wird. Als Halbzylinder wird im Folgenden jene Hälfte des entsprechenden Körpers bezeichnet, die gebildet wird, wenn der Körper durch beide Schnittkreisflächen geschnitten ist. Entsprechend kann unter einem Halbzylinder im Folgenden ein Körper bezeichnet werden, der von einer Mantelfläche und von zwei gegenüberliegenden Schnittflächen eines Halbkreises sowie von einer Grundfläche eingeschlossen wird.

Aus der CN107235632A ist ein Verfahren zum Erzeugen eines reliefartigen Dekors auf einer Oberfläche eines keramischen Druckmediums bekannt, umfassend die Schritte: a) Bereitstellen eines keramischen Druckmediums; b) Abgeben einer Flüssigkeit aus Glasur auf einen Teil der Oberfläche, sodass Erhebungen des reliefartigen Dekors gebildet werden, c) Aufbringen eines vorgegebenen ein- oder mehrfarbigen Bildmotivs auf die Oberflächen der Erhebungen, indem eine oder mehrere Tinten mit anorganischen Farbpigmenten auf die Oberflächen der Erhebungen aufgebracht werden, d) Brennen des keramischen Druckmediums, um ein eingebranntes reliefartiges Dekor auf der Oberfläche des Druckmediums zu erzeugen.

Es wäre wünschenswert über ein Verfahren zu verfügen, mit dem ein reliefartiges Dekor mit einer Glasurschicht mit halbzylinderförmigen Erhebungen erzeugt werden kann, welche Glasurschicht eine verbesserte Haftung an die damit bedeckte Oberfläche aufweist.

Es ist daher die Aufgabe eines ersten Aspekts der Erfindung ein Verfahren zum Erzeugen eines reliefartigen Dekors auf einer Oberfläche anzugeben, das eine Glasurschicht mit halbzylinderförmigen Erhebungen mit verbesserter Haftung an die damit bedeckte Oberfläche ermöglicht.

Erfindungsgemäss wird die Aufgabe mit einem Verfahren gemäss dem ersten Aspekt der Erfindung gelöst, das die Merkmale des Anspruchs 1 umfasst. Die Unteransprüche beziehen sich auf weitere vorteilhafte und gegebenenfalls zusätzlich erfinderische Ausführungsformen.

Dem ersten Aspekt der Erfindung liegt die Idee zugrunde, die Abgabe von Tropfen einer ersten Glasursuspension auf eine Oberfläche eines keramischen Druckmediums und das Einengen derselben dergestalt durchzuführen, dass eine erste Glasurschicht mit unmittelbar benachbarten halbzylinderförmigen Erhebungen mit jeweils einer Grundfläche und Mantelfläche ausgebildet wird, deren jeweilige Längsachse sich in eine erste Richtung erstreckt, wobei deren Grundflächen und deren Mantelflächen miteinander teilflächig überlappen.

Das erfindungemässe Ineinandergreifen der Mantelflächen und der Grundflächen der halbzylinderförmigen Erhebungen bewirkt eine verbesserte gegenseitige seitliche Stabilisierung der Erhebungen der Glasurschicht und somit insgesamt eine verbesserte Haftung der ersten Glasurschicht an die damit bedeckte Oberfläche, und zwar nicht nur nach dem Einbrennen, sondern auch bereits vor dem Einbrennschritt.

Ein erfindungsgemässes Verfahren zum Erzeugen eines reliefartigen Dekors auf einer Oberfläche eines keramischen Druckmediums wird durchgeführt, indem zunächst ein keramisches Druckmedium bereitgestellt wird. Anschliessend erfolgt ein Abgeben von Tropfen einer ersten Glasursuspension, die zumindest ein eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial halbzylinderförmige Erhebungen ausbildet. Während des Abgebens der Tropfen erfolgt eine kontinuierliche unidirektionale Relativbewegung zwischen den Düsen und dem Druckmedium.

Anschliessend erfolgt ein Brennen des keramischen Druckmediums, um ein eingebranntes reliefartiges Dekor auf der Oberfläche des Druckmediums zu erzeugen.

Als Oberfläche des Druckmediums wird im Folgenden jene Fläche des Druckmediums bezeichnet, die dem Wirkungsbereich eines Tintenstrahldruckers bzw. einer Abgabevorrichtung direkt exponiert wird.

Dementsprechend handelt es sich bei dem erfindungsgemässen Verfahren um ein Verfahren zum Erzeugen eines reliefartigen Dekors auf einer Oberfläche eines keramischen Druckmediums, umfassend die Schritte:
a) Bereitstellen eines keramischen Druckmediums;
b) Abgeben von Tropfen einer ersten Glasursuspension, die zumindest eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial halbzylinderförmige Erhebungen ausbildet, wobei während des Abgebens der Tropfen eine kontinuierliche unidirektionale Relativbewegung zwischen den Düsen und dem Druckmedium erfolgt;
c) Brennen des keramischen Druckmediums, um ein eingebranntes reliefartige Dekor auf der Oberfläche des Druckmediums zu erzeugen.

Erfindungsgemäss erfolgen die Abgabe und das Einengen der Tropfen in Schritt (b) dergestalt, dass eine erste Glasurschicht mit unmittelbar benachbarten halbzylinderförmigen Erhebungen mit jeweils einer Grundfläche und einer Mantelfläche ausgebildet wird, deren jeweilige Längsachse sich in eine erste Richtung erstreckt, wobei deren Grundflächen und deren Mantelflächen miteinander teilflächig überlappen.

Die halbzylinderförmigen Erhebungen sind jeweils länglich in die erste Richtung ausgebildet, wobei deren Länge jeweils vorzugsweise in einem Bereich von 0,5cm bis 50cm beträgt, besonders bevorzugt in einem Bereich von 0,5cm bis 25cm, besonders bevorzugt in einem Bereich von 0,5cm bis 10 cm, ganz besonders bevorzugt ein einem Bereich von 0,5cm bis 5 cm.

Gemäß einer bevorzugten Ausführungsform des erfindungsgemässen Verfahrens erfolgt in Schritt (b) die Abgabe und das Einengen der Tropfen dergestalt, dass eine erste Glasurschicht mit unmittelbar benachbarten halbzylinderförmigen Erhebungen mit jeweils einer Grundfläche und einer Mantelfläche ausgebildet wird, deren jeweilige Längsachse sich in eine erste Richtung erstreckt, wobei deren Grundflächen und deren Mantelflächen miteinander teilflächig überlappen, dergestalt, dass gegenüberliegende Randbereiche der Grundflächen und gegenüberliegende Randbereiche der Mantelflächen der jeweiligen Erhebungen miteinander überlappen.

Gemäß einer bevorzugten Ausführungsform des erfindungsgemässen Verfahrens wird in Schritt (b) bei der unidirektionale Relativbewegung das Druckmedium in eine Transportrichtung transportiert, wobei vorzugsweise die erste Richtung die Transportrichtung des Druckmediums ist, sodass die Abgabe und das Einengen der Tropfen in Schritt (b) dergestalt erfolgen, dass eine erste Glasurschicht mit unmittelbar benachbarten halbzylinderförmigen Erhebungen mit jeweils einer Grundfläche und Mantelfläche ausgebildet wird, deren jeweilige Längsachse sich in die Transportrichtung erstreckt, wobei deren Grundflächen und deren Mantelflächen miteinander teilflächig überlappen.

In Schritt (a) kann als keramisches Druckmediums ein gebranntes oder ungebranntes keramisches Druckmedium bereitgestellt werden. Statt einem keramischen Druckmedium kann auch ein glasartiges Druckmedium zum Einsatz kommen. In Bezug auf den Brennvorgang ist jedenfalls wichtig, dass das Druckmedium brennstabil ist.

Der für Schritt (b) bereitgestellte erste Tintenstrahldrucker kann unmittelbar benachbarte Düsen entlang einer quer zur Transportrichtung ausgerichteten zweiten Richtung umfassen, welche Abstände die Auflösung quer zur Transportrichtung definieren, wobei die unmittelbar benachbarten Düsen in Transportrichtung dergestalt beabstandet angeordnet werden, dass sie entlang der zweiten Richtung unmittelbar einander angrenzende und zu bedruckende Pixel von auf der Oberfläche angedachten Pixelreihen mit der ersten Glasursuspension so zeitlich versetzt bedrucken und das Druckmedium in Transportrichtung mit einer solchen Geschwindigkeit transportiert wird, dass eine zeitlich versetzte Einengung der auf die Oberfläche aufgetragenen Tropfen erfolgt und später aufgebrachten Tropfen einer Rasterzeile mit früher aufgebrachten Tropfen einer unmittelbar benachbarten Rasterzeile nicht oder nur teilweise in Schritt (b) im Zustand als Suspensionen ineinanderlaufen.

In einer bevorzugten Ausgestaltung des erfindungsgemässen Verfahrens wird eine zweite Glasursuspension oder eine erste Engobe in Form einer Suspension auf die erste Glasurschicht und auf Teile der Oberfläche, die nicht mit der ersten Glasurschicht bedeckt sind aber zumindest mit der ersten Glasurschicht unmittelbar angrenzen, vorzugsweise auf die gesamte mit der ersten Glasurschicht bedeckten und nicht bedeckten Oberflächen des keramischen Druckmediums, mit einer ersten Abgabevorrichtung durch Besprühen derselben auf die entsprechenden Oberflächen aufgetragen und eingeengt, dergestalt, dass die zweite Glasursuspension eine vollflächig Abdeckschicht ausbildet.

Von Vorteil ist diese Weiterbildung, da dadurch eine Glättung und eine oberflächliche, materielle Homogenisierung des reliefartigen Dekors erzielt wird und gleichzeitig eine verbesserte seitliche Stabilisierung und somit insgesamt eine verbesserte Haftung der ersten Glasurschicht an den damit bedeckten Untergrund bewirkt wird. Ausserdem bewirkt die vollständige Abdeckschicht zumindest teilweise eine Verminderung des Hervorscheinens der Untergrundfarbe des keramischen Druckmediums. Die Engobe bewirkt je nach ihrer chemischen Zusammensetzung nach dem Einbrennen einen Matt- oder Glanzeffekt.

Die Engobe ist eine dünnflüssige Tonmineralmasse, die zur Einfärbung oder Beschichtung keramischer Druckmedien dient. Dabei kann es sich um Schlicker handeln. Engoben bilden anders als Glasuren keine Schutzschicht für das keramische Druckmedium.

Gemäß einer weiteren bevorzugten Ausführungsform des Verfahrens wird vor der Ausbildung der ersten Glasurschicht gemäß Schritt (b) eine grundierende Glasur oder Engobe, jeweils in Form einer Suspension, auf zumindest einem Teil, vorzugsweise auf die gesamte Oberfläche des Druckmediums durch Besprühen derselben mit einer zweiten Abgabevorrichtung aufgetragen, dergestalt, dass sie eine abdeckende Grundierungsschicht ausbildet.

Die Porosität bzw. das volumetrischen Durchmesser der Partikelgrösse d50(v) und/oder d100(v) der Partikel der grundierenden Glasurschicht oder Engobe kann kleiner sein als die Porosität bzw. das volumetrischen Durchmesser der Partikelgrösse d50(v) und/oder d100(v) der Partikel des ungebrannten oder gebrannten keramischen Druckmediums.

Dementsprechend kann mit der Aufbringung der grundierenden Glasurschicht oder Engobe der Einbrennprozess leichter kontrolliert werden.

Das Absorptionsverhalten der ersten Glasurschicht in Bezug auf die zu bedruckende Oberfläche hängt unter anderem von der Art, z.B. von der Porosität oder der Partikelverteilung, der damit zu bedruckenden Oberfläche, und dem Benetzungsverhalten der ersten Glasursuspension in Bezug auf die zu benetzende Oberfläche zusammen.

Von Vorteil ist oder sind diese Weiterbildung(en), da dadurch eine Verminderung der Porosität der mit der grundierenden Glasur zu bedruckenden Oberfläche sowie eine zumindest teilweise Verminderung des Hervorscheinens der Untergrundfarbe des keramischen Druckmediums erzielt wird.

In einer bevorzugten Ausgestaltung des erfindungsgemässen Verfahrens wird eine erste und/oder zweite Glasursuspension und/oder erste Engobe bereitgestellt, die nach dem Einbrennen jeweils eine weißliche oder farbige, insbesondere gräuliche Farbe ausbildet oder ausbilden.

Die zweite Glasursuspension kann sich in ihrer chemischen Zusammensetzung von der ersten Glasursuspension unterscheiden oder dieselbe chemische Zusammensetzung aufweisen.

Gemäß einer besonders bevorzugten Ausführungsform des Verfahrens wird oder werden erste und/oder zweite Abgabevorrichtung mit Sprühdüsen bereitgestellt, über die die zweite Glasursuspension oder die erste Engobe in Form einer Suspension und/oder die grundierende Glasursuspension oder Engobe in Form einer Suspension auf die entsprechenden Oberflächen abgegeben.

In einer besonders bevorzugten Ausführungsform des erfindungsgemässen Verfahrens wird nach dem Ausbilden der zweiten Glasurschicht oder der ersten Engobeschicht ein vorgegebenes ein- oder mehrfarbiges Bildmotiv auf die Oberfläche der zweiten Glasurschicht oder ersten Engobeschicht mit einer Applikationsvorrichtung aufgebracht. Die Applikationsvorrichtung kann ein zweiter Tintenstrahldrucker sein, wobei in diesem Fall das Aufbringen des vorgegebenen ein- oder mehrfarbigen Bildmotivs auf die Oberfläche der zweiten Glasurschicht oder ersten Engobeschicht erfolgt, indem Tropfen einer oder mehrerer Tintenstrahldrucktinten mit anorganischen Pigmenten abgegeben werden.

Von Vorteil ist diese Weiterbildung, da dadurch Farbgleichheit an mit derselben Farbe bedruckten Stellen der Oberfläche nach dem Brennen erzielt werden kann. Demgegenüber hat das Bedrucken von Stellen der ersten Glasurschicht und von Teilen der Oberfläche, die nicht mit der ersten Glasurschicht bedeckt sind, mit derselben Farbe in der Regel zur Folge, dass sich unterschiedliche Färbungen nach dem Brennen ausbilden.

Das Einengen durch Absorption der flüssigen Bestandteile der ersten Glasursuspension kann durch die in Kontakt stehende Schicht oder Oberfläche und/oder durch Trocknung der ersten Glasursuspension erfolgen.

Gemäss einer bevorzugten Ausführungsform werden die keramischen Druckmedien vor dem Abgeben von Tropfen der ersten Glasursuspension gemäß Schritt (b) auf eine Temperatur zwischen 20°C und 120°C gebracht, vorzugsweise zwischen 50°C und 120°C, wobei das Abgeben der Tropfen gemäß Schritt (b) auf den Teil der Oberfläche erfolgt während das keramische Druckmedium eine entsprechende Temperatur zwischen 20°C und 120°C, vorzugsweise zwischen 50°C und 120°C aufweist.

Gemäss einer besonders bevorzugten Ausführungsform des erfindungsgemässen Verfahrens werden nach dem Auftragen der ersten Glasursuspension und vor dem Einengen derselben gemäß Schritt (b) die folgenden Schritte durchgeführt
- Vollflächiges Auftragen von trockenem keramischem Material in Form von Partikeln zumindest auf die mit der ersten Glasursuspension teilweise bedecke Oberfläche des keramischen Druckmediums und vorzugsweise auf Teile der Oberfläche, die nicht mit der ersten Glasursuspension bedeckt sind, wodurch das Material vorübergehend an dem mit der ersten Glasursuspension aufgedruckten Teil fixiert wird;
- Entfernen des nicht fixierten keramischen Materials

Von Vorteil ist diese Weiterbildung, da dadurch einerseits ein reliefartiges Dekor mit einer ausgeprägteren, höheren Strukturhöhe und andererseits ein rascheres Einengen der Tropfen durch Absorption des aufgetragenen keramischen Materials durch die erste Glasurschicht erfolgt. Von Nachteil hingegen ist, dass beim Entfernen des nicht fixierten keramischen Materials sich jedoch meist nicht vermeiden lässt, dass auch in sehr geringem Maße Partikel vom Teil der Oberfläche mitentfernt werden, auf dem die erste Glasur aufgetragen wurde, sodass sich eine unregelmäßige Oberfläche des reliefartigen Dekors bilden kann.

Diesem Problem kann jedoch Abhilfe verschafft werden, wenn die zweite Glasurschicht oder die erste Engobeschicht auf die Schicht aus dem keramischen Material aufgetragen wird.

Das Entfernen des nicht fixierten keramischen Materials kann beispielsweise mit einer Absaugvorrichtung oder einer Abblasvorrichtung erfolgen.

Gemäß einer weiteren Ausführungsform des Verfahrens wird auf dem aufgetragenen Bildmotiv eine Schutzschicht umfassend eine Fritte, die nach dem Einbrennen durchsichtig wird, aufgetragen.

Die Schutzschicht kann aus einer Zusammensetzung gebildet werden, die zur Erhöhung der mechanischen Resistenz des Bildmotivs gegenüber Abrieb und/oder und zur Erhöhung der chemischen Resistenz gegenüber Säuren und Laugen geeignet ist. Dem Fachmann sind die entsprechenden Materialien bekannt.

Die Auftragung der Zusammensetzung zur Ausbildung der Schutzschicht kann mit einer dritten Abgabevorrichtung, die vorzugsweise mit Sprühdüsen bereitgestellt wird, durch Besprühen derselben auf das Bildmotiv, erfolgen.

Die erste Abgabevorrichtung, die zweite Abgabevorrichtung und die dritte Abgabevorrichtung können dieselbe Abgabevorrichtung oder unterschiedliche Abgabevorrichtungen sein.

Die Sprühdüsen der ersten und/oder zweiten und/oder dritten Abgabevorrichtung können Flachstrahldüsen sein.

Gemäß einer bevorzugten Ausführungsform des erfindungsgemässen Verfahrens sind die Sprühdüsen der ersten und/oder zweiten und/oder dritten Abgabevorrichtung keine Düsen eines Tintenstrahldruckers, die gemäß dem Tintenstrahlprinzip, d.h. dem Drop-on-Demand-Prinzip, arbeiten.

Gemäß einer besonders bevorzugten Ausführungsform des Verfahrens wird jede halbzylinderförmige Erhebung durch eine Düse des ersten Tintenstrahldruckers gebildet.

Gemäß einer besonders bevorzugten Ausführungsform des erfindungsgemässen Verfahrens wird die erste Glasurschicht in solchen Mengen aufgetragen, dass die dadurch eingeengten ausgebildeten Erhebungen eine Höhe in einem Bereich zwischen von 70 bis 1000 µm aufweisen, vorzugsweise eine Höhe in einem Bereich zwischen von 150 bis 1000 µm aufweisen.

Als erste Glasursuspension kann beispielsweise eine Glasursuspension verwendet werden, umfassend Wasser, zumindest eine nicht-wässrige polare Flüssigkeit, ein zumindest eine Fritte und ein Flussmittel enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) ≤ 50 µm und von 50 µm ≤ d100(v) ≤ 100 µm aufweist.

Als zweite Glasursuspension kann beispielsweise eine Glasursuspension verwendet werden, umfassend Wasser, zumindest eine nicht-wässrige polare Flüssigkeit, ein zumindest eine Fritte und ein Flussmittel enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) ≤ 100 µm und von 60 µm ≤ d100(v) ≤ 250 µm aufweist.

Gemäß einer besonders bevorzugten Ausführungsform des Verfahrens enthalten das erste Glasurmaterial und das zweite Glasurmaterial Partikel wenigstens zweier voneinander unterschiedlicher Partikelgrößenpopulationen, wobei das zweite Glasurmaterial Partikel einer Partikelgrößenpopulation enthält, die einen volumetrischen Durchmesser der Partikelgrösse von d100(v) aufweist und der größer ist als der volumetrische Durchmesser der Partikelgrösse der entsprechenden Population der ersten Glasurschicht.

Von Vorteil ist diese Weiterbildung, da dadurch eine erhöhte Prozesssicherheit beim Einbrennvorgang erzielt werden kann. Diese erfindungsgemäße Kombination der Glasuren verhalten sich so, dass reliefartige Dekore in kürzerer Zeit defektlos hergestellt werden können, als wenn nur die erste Glasurschicht unter denselben Brennbedingungen gebrannt werden würde.

Gemäß einer besonders bevorzugten Ausführungsform des Verfahrens wird der erste Tintenstrahldrucker als Tintenstrahldrucker mittels Stössel betriebener Tintenstrahldruckköpfe bereitgestellt.

Als Beispiel für solche Tintenstrahldruckköpfe seien die in der Beschreibung der WO 2013/013983 A1 von der gleichnamigen Anmelderin offenbarten Tintenstrahldruckköpfe für Tintenstrahldrucker zu erwähnen, die mittels Stössel betrieben werden. Aufgrund des großen Innendurchmessers der Düsen zwischen 250µm bis 350 µm lassen sich bei derartigen Druckköpfen Glasursuspensionen mit größeren Partikeln drucken als bei den sonst typischen piezoelektrisch betriebenen Tintenstrahldruckvorrichtungen aus dem Stand der Technik, die typischerweise Düsen mit einem Innendurchmesser von bis zu 50 µm umfassen.

Mittels des erfindungsgemässen Verfahrens lässt sich ein erfinderisches gebranntes keramisches Druckmedium gemäß Anspruch 11 herstellen.

Entsprechend wird ein erfindungsgemässes gebranntes mit einem reliefartigen Dekor versehenes keramisches Druckmedium realisiert umfassend auf einem Teil der Oberfläche des Druckmediums eine erste Glasurschicht mit unmittelbar benachbarten halbzylinderförmigen Erhebungen.

Erfindungegemäss sind die unmittelbar benachbarten halbzylinderförmigen Erhebungen mit jeweils einer Grundfläche und Mantelfläche ausgebildet, deren jeweilige Längsachse sich in eine erste Richtung erstreckt, wobei deren Grundflächen und deren Mantelflächen sich teilflächig überlappen.

Gemäß einer bevorzugten Ausführungsform des erfindungsgemässen Druckmediums umfasst das Druckmedium eine zweite Glasurschicht oder eine erste Engobeschicht auf der ersten Glasurschicht und/oder auf Teilen der Oberfläche, die nicht mit der ersten Glasurschicht bedeckt sind aber zumindest an die erste Glasurschicht angrenzen, wobei die zweite Glasurschicht besonders bevorzugt gesamte Oberfläche, d.h. sowohl mit erster Glasurschicht bedeckte als auch nicht bedeckte Teile des keramischen Druckmediums bedeckt und damit eine vollflächige Abdeckschicht ausbildet.

Es hat sich gezeigt, dass in vielen Fällen eine klare Trennlinie zwischen der ersten und zweiten Glasurschicht entweder mit dem freien Auge oder zumindest mit dem Mikroskop sichtbar ist.

Gemäß einer weiteren bevorzugten Ausführungsform des Druckmediums umfasst das Druckmedium zwischen der ersten Glasurschicht und seiner Oberfläche eine grundierende Glasurschicht oder Engobeschicht.

Gemäß einer anderen bevorzugten Ausführungsform umfasst das Druckmedium auf der zweiten Glasurschicht oder ersten Engobeschicht ein ein- oder mehrfarbiges Motiv.

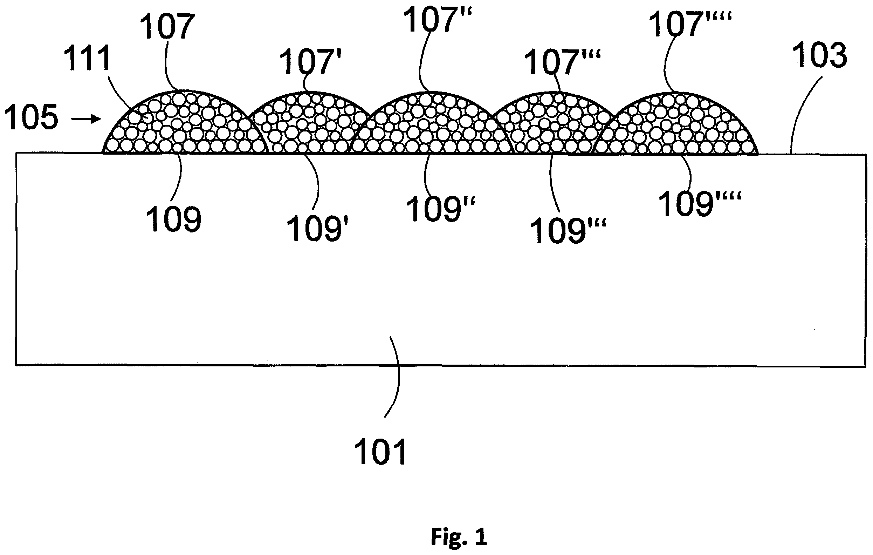

Die erfindungsgemässe Anordnung der halbzylinderförmigen Erhebungen der ersten Glasurschicht soll nachfolgend und anhand Figur 1 näher erläutert werden:
**Fig. 1** zeigt eine schematische Seitenansicht einer besonders bevorzugten Ausführungsform des erfindungegemässen Verfahrens einer gemäß Schritt (b) ausgebildeten ersten Glasurschicht 105 auf einem keramischen Druckmedium 101 im Querschnitt.

Figur 1 zeigt ein keramisches Druckmedium 101 auf der gemäß Schritt (b) eine erste Glasurschicht 101 mit unmittelbar benachbarten halbzylinderförmigen Erhebungen mit jeweils einer Grundfläche 109, 109', 109", 109‴, 109ʺʺ und einer Mantelfläche 107, 107', 107", 107‴, 107"" ausgebildet wurde, deren jeweilige Längsachse sich in eine erste Richtung (nicht gezeigt, da sie in diesem Fall in die Papiereben hinein ausgebildet ist) erstreckt, wobei deren Grundflächen 109, 109', 109", 109‴, 109"" und deren Mantelflächen 107, 107', 107", 107‴, 107ʺʺ miteinander teilflächig überlappen. Die halbzylinderförmigen Erhebungen umfassen eine Fritte enthaltendes Glasurmaterial 111 in Form von Partikeln.

Der Ordnung halber sei darauf hingewiesen, dass zum besseren Verständnis des Aufbaus des Druckmediums mit der ersten Glasurschicht bzw. deren Bestandteile teilweise unmassstäblich und/oder vergrössert und/oder verkleinert dargestellt wurden.

Mithilfe des Verfahrens nach Anspruch 1 wird verfahrensbedingt die erste Glasurschicht mit unmittelbar benachbarten halbzylinderförmigen Erhebungen mit jeweils einer Grundfläche und Mantelfläche ausgebildet, deren jeweilige Längsachse sich in eine erste Richtung erstreckt, wobei deren Grundflächen und deren Mantelflächen miteinander teilflächig überlappen. Solche halbzylinderförmigen Erhebungen sind ein Beispiel von optisch wahrnehmbaren Streifen. Diese wirken auf einen Betrachter optisch inhomogen gegenüber nicht mit wahrnehmbaren Streifen versehenen, typischerweise flachen Oberflächenbereichen eines keramischen Druckmediums, und sind deshalb bei bestimmten Produktarten unerwünscht.

Bei Verfahren zum Erzeugen eines reliefartigen Dekors auf keramischen Druckmedien mit einer ersten Glasursuspension können sich ganz allgemein während der Ausbildung von Erhebungen aus Glasurmaterial und vor dem Brennen des keramischen Druckmediums Inhomogenitäten in den Erhebungen ausbilden, die beim Brennen nicht oder nur teilweise beseitigt werden können. Inhomogenitäten in den Erhebungen des reliefartigen Dekors können beispielsweise zu Stande kommen, wenn die Oberfläche des keramischen Druckmediums eine nicht homogene Partikelgrösseverteilung aufweist, die zu einem inhomogenen Absorptionsverhalten in Bezug auf die Glasursuspension führt, sodass Glasursuspension von einigen Bereichen der Oberfläche rascher absorbiert wird als von anderen Bereichen. Auch in einer Charge hergestellte keramischen Druckmedien können an ihrer Oberfläche voneinander abweichende Partikelgrößenverteilungen aufweisen.

Weiter können Inhomogenitäten in den Erhebungen des reliefartigen Dekors beispielsweise zu Stande kommen, wenn Düsen des Tintenstrahldruckers verstopfen und keine Tropfen mehr abgeben oder teilweise verstopfen sodass unter Umständen lediglich Tropfen mit einer gegenüber der vorgesehenen Tropfenmasse kleineren Tropfenmasse abgegeben werden und/oder wenn Tropfen aufgrund schrägstrahlender Düsen nicht auf die gewünschte Position auf das Druckmedium auftreffen.

Nach einem zweiten nicht beanspruchten Aspekt wird ein Verfahren zum Erzeugen eines reliefartigen Dekors auf einer Oberfläche eines keramischen Druckmediums angegeben, das zu einer Reduktion oder gar Beseitigung von Inhomogenitäten in einer ersten Glasurschicht mit Erhebungen vor dem Brennen des Druckmediums führt, sodass eine Reduktion oder gar Beseitigung von Qualitätsunterschieden bei der Erzeugung von reliefartigen Dekoren auf keramischen Druckmedien ermöglicht wird.

Dem zweiten Aspekt liegt die Idee zugrunde, das Druckmedium und/oder die auf das Druckmedium aufgebrachten Tropfen in Schwingung zu versetzen, vorzugsweise dergestalt, dass eingeengtes Glasurmaterial Erhebungen mit jeweils im Wesentlichen flacher Oberfläche oder flacher Oberfläche ausbildet.

Dem dritten Aspekt liegt alternativ die Idee zugrunde, zumindest einen kontinuierlichen Fluidstrom aus einer fluidstromaktivierenden Vorrichtung gegen die Oberfläche des Druckmediums, auf die die Tropfen aufgebracht wurden, zu richten, vorzugsweise dergestalt, dass eingeengtes Glasurmaterial Erhebungen mit jeweils im Wesentlichen flacher Oberfläche oder flacher Oberfläche ausbildet.

Das erfindungsgemässe Verfahren zum Erzeugen eines reliefartigen Dekors auf einer Oberfläche eines keramischen Druckmediums wird durchgeführt, indem zunächst ein keramisches Druckmedium bereitgestellt wird. Anschliessend erfolgt ein Abgeben von Tropfen einer ersten Glasursuspension, die zumindest ein, eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial Erhebungen ausbildet. Während des Abgebens der Tropfen erfolgt eine kontinuierliche unidirektionale Relativbewegung zwischen den Düsen und dem Druckmedium. Anschliessend erfolgt ein Brennen des keramischen Druckmediums, um ein eingebranntes reliefartiges Dekor auf der Oberfläche des Druckmediums zu erzeugen.

Dementsprechend handelt es sich bei der Erfindung um ein Verfahren zum Erzeugen eines reliefartigen Dekors auf einer Oberfläche eines keramischen Druckmediums, umfassend die Schritte:
a) Bereitstellen eines keramischen Druckmediums;
b) Abgeben von Tropfen einer ersten Glasursuspension, die zumindest eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial Erhebungen ausbildet, wobei während des Abgebens der Tropfen eine kontinuierliche unidirektionale Relativbewegung zwischen den Düsen und dem Druckmedium erfolgt;
c) Brennen des keramischen Druckmediums, um ein eingebranntes reliefartiges Dekor auf der Oberfläche des Druckmediums zu erzeugen.

Nach dem zweiten nicht beanspruchten Aspekt wird oder werden in Schritt (b) das Druckmedium und/oder die auf das Druckmedium aufgebrachten Tropfen in Schwingung versetzt.

Dadurch wird eingeengtes Glasurmaterial Erhebungen mit jeweils im Wesentlichen flacher Oberfläche oder flacher Oberfläche ausgebildet, wenn beispielsweise das Druckmedium ausreichend schnell, und mit einer ausreichend grossen Amplitude und Frequenz mechanisch in Schwingung versetzt wird und/oder die auf das Druckmedium aufgebrachten Tropfen mit Schallwellen einer ausreichend grossen Schallintensität und Frequenz in Schwingung versetzt werden, indem die Oberfläche des Druckmediums, auf der die Tropfen aufgebracht wurden durch entsprechende Schallwellen beschallt wird, bevor die Tropfen über ein bestimmtes Mass, bevorzugt zumindest im Wesentlichen vollständig, eingeengt wurden. Dementsprechend wird gemäß einer bevorzugten Ausführungsform des zweiten Aspekts das Druckmedium und/oder die auf das Druckmedium aufgebrachten Tropfen in Schwingung versetzt, dergestalt, dass eingeengtes Glasurmaterial Erhebungen mit jeweils im Wesentlichen flacher Oberfläche oder flacher Oberfläche ausbildet.

Nach dem dritten Aspekt wird zumindest ein kontinuierlicher Fluidstrom aus einer fluidstromaktivierenden Vorrichtung gegen die Oberfläche des Druckmediums, auf die die Tropfen aufgebracht wurden, gerichtet.

Dadurch wird eingeengtes Glasurmaterial Erhebungen mit jeweils im Wesentlichen flacher Oberfläche oder flacher Oberfläche ausgebildet, wenn beispielsweise ausreichend schnell zumindest ein kontinuierlicher und ausreichend homogener Fluidstrom aus einer fluidstromaktivierenden Vorrichtung gegen die Oberfläche des Druckmediums, auf die die Tropfen aufgebracht wurden, gerichtet wird, bevor die Tropfen über ein bestimmtes Mass, bevorzugt zumindest im Wesentlichen vollständig, eingeengt wurden. Dementsprechend werden gemäß einer bevorzugten Ausführungsform des dritten Aspekts die auf das Druckmedium aufgebrachten Tropfen zumindest ein kontinuierlicher, und vorzugsweise homogener, Fluidstrom aus einer fluidstromaktivierenden Vorrichtung gegen die Oberfläche des Druckmediums, auf die die Tropfen aufgebracht wurden, gerichtet, dergestalt, dass eingeengtes Glasurmaterial Erhebungen mit jeweils im Wesentlichen flacher Oberfläche oder flacher Oberfläche ausbildet.

Die Lösungen haben jeweils den Vorteil, dass dadurch ein schnelles, und vorzugsweise ein im Wesentlichen vollständiges oder vollständiges, Ineinanderlaufen von auf das Druckmedium aufgebrachten benachbarten Tropfen ermöglicht wird.

Gemäß einer bevorzugten Ausführungsform des nicht beanspruchten Verfahrens hätte sich ohne entsprechendes In-Schwingung-Versetzen verfahrensbedingt die erste Glasurschicht mit unmittelbar benachbarten halbzylinderförmigen Erhebungen mit jeweils einer Grundfläche und Mantelfläche ausgebildet, deren jeweilige Längsachse sich in eine erste Richtung erstreckt hätten, wobei vorzugsweise deren Grundflächen und deren Mantelflächen miteinander teilflächig überlappt hätten.

Von Vorteil ist diese Weiterbildung, da dadurch ein im Wesentlichen vollständiges oder vollständiges Ineinanderlaufen von benachbart aufgetragenen Tropfen bewirkt wird, sodass keine Glättung der sonst ausgebildeten halbzylinderförmigen Erhebungen des reliefartigen Dekors durch Auftrag von zusätzlichem Material in einem zeit- und kostenintensiven nachträglichem Schritt mehr erforderlich wird. Ausserdem hat diese Weiterbildung den Vorteil, dass Erhebungen realisiert werden können, die keinen "Kaffeeringeffekt" zeigen.

Ohne entsprechendes In-Schwingung-Versetzen kann es während dem Einengen der Tropfen aufgrund der sich dabei verändernden Tropfenform zu einer nicht homogenen Verdunstungs- /Verdampfungsrate an dessen Oberfläche kommen, die zu einer ungleichmäßigen Partikelgrößenverteilung führt, und die sich letztlich darin äußert, dass am Rande der habzylinderförmigen Erhebungen der Glasurschicht überwiegend kleinere Partikel anzutreffen sind. Wenn ein derartiges reliefartiges Dekor mit einem einfarbigen Bildmotiv bedruck würde, dann würde diese inhomogene Partikelgrößenverteilung in den Erhebungen oft wiederum zu einer inhomogenen Reaktivität der Partikel der Glasursuspension gegenüber anorganischen Pigmenten des Bildmotivs während dem Brennvorgang führen, sodass an den Rändern der halbzylinderförmigen Erhebungen sich eine andere Farbe des Bildmotivs ausbilden würde als im Mittelbereich derselben.

Eine Ausbildung der ersten Glasurschicht mit entsprechenden unmittelbar benachbarten halbzylinderförmigen Erhebungen erfolgt verfahrensbedingt, wenn beispielsweise das Abgeben und das Einengen der Tropfen der ersten Glasursuspension auf das Druckmedium dergestalt erfolgt, dass unmittelbar auf das Druckmedium aufgebrachte benachbarte Tropfen nicht oder nur teilweise in Schritt (b) im Zustand einer Suspension ineinanderlaufen.

Unterschiedliche Faktoren beeinflussen die Ausbildung von Erhebungen des reliefartigen Dekors. Hierzu gehören verfahrensbedingt unter anderem die Temperatur des keramischen Druckmediums und der Glasursuspension, die Thixotropie und die Fliesseigenschaften der Glasursuspension, das Benetzungsverhalten der Glasursuspension, die Geschwindigkeit der Relativbewegung zwischen Düsen und Druckmedium, der Abstand der auf das Medium aufgebrachten Tropfen der Glasursuspension sowie deren Volumen, die Absorptionsfähigkeit des keramischen Druckmediums gegenüber der Glasursuspension, die Verdunstungs- und/oder Verdampfungsrate der aufgebrachten Tropfen sowie die Anordnung der Düsen des ersten Tintenstrahldruckers zueinander und damit der Abstand der Düsen zueinander in Bezug auf die Oberfläche des keramischen Druckmediums sowie die Ausstossfrequenz der Tropfen. Dabei ist zu beachten, dass sich diese Faktoren auch gegenseitig beeinflussen.

Gemäss einer bevorzugten Ausführungsform wird oder werden nach Vollendung der Abgabe der Tropfen und während dem Einengen derselben das Druckmedium und/oder die auf das Druckmedium aufgebrachten Tropfen in Schwingung versetzt.

Gemäss einer weiteren bevorzugten Ausführungsform des Verfahrens wird eine deckende Glasur- oder Engobe- oder Smaltobesuspension auf die erste Glasurschicht und auf Teile der Oberfläche, die nicht mit der ersten Glasurschicht bedeckt sind aber zumindest mit der ersten Glasurschicht angrenzen, vorzugsweise auf die gesamte mit der ersten Glasurschicht bedeckten und nicht bedeckten Oberfläche des keramischen Druckmediums, mit einer ersten Abgabevorrichtung durch Besprühen oder Giessen derselben auf die entsprechenden Oberflächen aufgetragen und dann teilweise oder vollständig eingeengt.

Von Vorteil ist diese Weiterbildung und diese zu Anspruch 3 alternative technische Lösung, da dadurch eine teilweise oder vollständige materielle Homogenisierung des reliefartigen Dekors mit der Verwendung einer kleineren Menge an deckender Glasur- oder Engobe- oder Smaltobesuspension als beim Verfahren nach Anspruch 3 notwendig ist, erzielt werden kann. Unter einer Suspension aus "Smaltobe" wird in der vorliegenden Beschreibung eine Mischung einer Glasursuspension und einer Engobesuspension verstanden.

Die mit Schritt (b) gebildeten Erhebungen können vor dem entsprechenden Auftrag der deckenden Glasur- oder Engobe- oder Smaltobesuspension durch Einwirken von Energie, insbesondere Wärme, mithilfe einer geeigneten Energiequelle teilweise oder vollständig getrocknet werden.

Die Wärmequelle kann eine NIR- und/oder IR-Strahlungsquelle sein.

Gemäss einer bevorzugten Ausführungsform des nicht beanspruchten Verfahrens wird das Druckmedium über ein mechanisches Mittel, das eine mechanische Schwingung in eine oder mehrere Richtungen erzeugt, in Schwingung versetzt.

Das mechanische Mittel kann eine Einsatzeinrichtung zur Aufnahme des Druckmediums sein, in die das keramische Druckmedium eingesetzt wird.

Gemäss einer bevorzugten Ausführungsform wird das keramische Druckmedium, vorzugsweise nach Vollendung der Abgabe der Tropfen, und während des Einengens der Tropfen über eine Transporteinrichtung in eine Transportrichtung transportiert, wobei die Transporteinrichtung in mehrere Module unterteilt ist und zumindest ein Modul über das eine mechanische Mittel, das die eine mechanische Schwingung erzeugt, in Schwingung versetzt wird, wobei das Modul durch das mechanische Mittel bevorzugt synchron mit den Druckmedien in Schwingung gebracht wird.

Gemäss einer besonders bevorzugten Ausführungsform liegt die Amplitude der mechanischen Schwingung, die das mechanische Mittel erzeugt, in einer Grössenordnung von 1 µm bis 100000µm, bevorzugt 100 µm bis 10000µm und die Frequenz der Schwingung in einer Grössenordnung von 2 Hz -10000 Hz, bevorzugt 10 Hz -1000 Hz, besonders bevorzugt 10 Hz -100 Hz.

Gemäss einer bevorzugten Ausführungsform werden die Tropfen der Glasursuspension in einer ersten Dimension der Oberfläche des Druckmediums in einer vorbestimmten Auflösung X und in einer quer zur ersten Dimension ausgerichteten zweiten Dimension in einer vorbestimmten Auflösung Y auf das Druckmedium aufgetragen und auf dem Druckmedium eingeengt, während dessen das Druckmedium über ein mechanisches Mittel, das eine mechanische Schwingung in eine oder mehrere Richtungen erzeugt, in Schwingung versetzt wird, wobei die Amplitude der mechanischen Schwingung, die das mechanische Mittel erzeugt, zumindest in Richtung der erste Dimension ≤1/2 der Auflösung X, bevorzugt ≤ der Auflösung X beträgt, und wobei die Frequenz der Schwingung in einer Grössenordnung von 2 Hz -10000 Hz, bevorzugt 10 Hz -1000 Hz, besonders bevorzugt 10 Hz -100 Hz liegt. Die zweite Dimension entspricht der Richtung der unidirektionalen Relativbewegung zwischen den Düsen und dem Druckmedium.

Von Vorteil ist diese Weiterbildung, da dadurch die durch die gewünschte Auflösung vorgegebene Bildschärfe der Glasurschichten mit ausgebildeten Erhebungen im Wesentlichen beibehalten werden kann und gleichzeitig die Ausbildung von Inhomogenitäten teilweise oder gar vollständig verhindert werden kann.

Beim Tintenstrahldruck wird die Auflösung durch den Abstand der durch den Druck aufgebrachten Tropfen auf die Oberfläche des keramischen Druckmediums bestimmt. Im Falle des zweidimensionalen Drucks kann die Auflösung in einer Dimension sich von der Auflösung in der anderen Dimension unterscheiden. Die Oberfläche des keramischen Druckmediums ist typischerweise im Wesentlichen flach oder vollständig flach.

Gemäss einer alternativen oder ergänzenden bevorzugten Ausführungsform des nicht beanspruchten Verfahrens werden die auf das Druckmedium aufgebrachten Tropfen durch Schallwellen in Schwingung versetzt.

Gemäss einer besonders bevorzugten Ausführungsform werden die auf das Druckmedium aufgebrachten Tropfen in Schwingung versetzt, indem die Oberfläche des Druckmediums, auf der die Tropfen aufgebracht wurden durch Schallwellen mit einer Schallintensität in der Grössenordnung von 50 W/m2 bis 10000 W/m2, bevorzugt 200 W/m2 bis 1000 W/m2 und in einem Frequenzbereich in der Grössenordnung von 5Hz bis 16kH, bevorzugt von 5Hz bis 2000Hz über einen ausreichenden Zeitintervall beschallt wird.

Gemäss einer bevorzugten Ausführungsform des erfindungsgemässen Verfahrens wird vor der Ausbildung der ersten Glasurschicht gemäß Schritt (b) eine grundierende Glasur- oder Engobe- oder Smaltobesuspension auf zumindest einem Teil, vorzugsweise auf die gesamte Oberfläche des keramischen Druckmediums durch Besprühen oder Giessen derselben mit einer zweiten Abgabevorrichtung aufgetragen und teilweise oder vollständig eingeengt. Dadurch wird eine Grundierungsschicht aus Glasur oder Engobe oder Smaltobe zur Aufnahme der ersten Glasursuspension direkt auf der Oberfläche des keramischen Druckmediums ausbildet.

In Schritt (a) kann als keramisches Druckmediums ein gebranntes oder ungebranntes keramisches Druckmedium bereitgestellt werden. Statt einem keramischen Druckmedium kann auch ein glasartiges Druckmedium zum Einsatz kommen. In Bezug auf den Brennvorgang ist jedenfalls wichtig, dass das Druckmedium brennstabil ist.

Die Porosität der Oberfläche der grundierenden Glasur- oder Engobe- oder Smaltobeschicht bzw. der volumetrische Durchmesser der Partikelgrösse d50(v) und/oder d100(v) der Partikel der grundierenden Glasur- oder Engobe- oder Smaltobeschicht kann kleiner sein als die Porosität der Oberfläche des ungebrannten oder gebrannten keramischen Druckmediums bzw. als der volumetrische Durchmesser der Partikelgrösse d50(v) und/oder d100(v) der Partikel des ungebrannten oder gebrannten keramischen Druckmediums.

Dementsprechend kann mit der Aufbringung der grundierenden Glasur- oder Engobe- oder Smaltobeschicht der Einbrennprozess leichter kontrolliert werden.

In einer ersten bevorzugten Ausführungsform des erfindungsgemässen Verfahrens ist oder sind die Abgabevorrichtung zur Abgabe der deckenden Glasur- oder Engobe- oder Smaltobesuspension und die Abgabevorrichtung zum Auftrag der grundierenden Glasur- oder Engobe- oder Smaltobesuspension dieselbe Abgabevorrichtung oder unterschiedliche Abgabevorrichtungen, die Sprühdüsen umfasst oder umfassen.

Entsprechend kann gemäß zumindest einer dieser bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Besprühen derselben auf die entsprechende Oberfläche oder Oberflächen mittels Sprühdüsen erfolgen.

In einer zweiten bevorzugten Ausführungsform des erfindungsgemässen Verfahrens ist oder sind die Abgabevorrichtung zur Abgabe der deckenden Glasur- oder Engobe- oder Smaltobesuspension und die Abgabevorrichtung zum Auftrag der grundierenden Glasur- oder Engobe- oder Smaltobesuspension dieselbe Abgabevorrichtung oder unterschiedliche Abgabevorrichtungen, die zumindest eine längliche Schlitzdüse umfasst oder umfassen.

Entsprechend kann gemäß der zweiten bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Giessen derselben auf die entsprechende Oberfläche oder Oberflächen mittels zumindest einer länglichen Schlitzdüse erfolgen. Längliche Schlitzdüsen sind so konstruiert, dass sie die Glasur- oder Engobe- oder Smaltobesuspension aus der Schlitzdüse in Form eines Vorhangs kontinuierlich über eine längere Zeitspanne und nicht stossartig abgeben können.

Die sogenannte "Velatrice Masterfall" von der Firma Airless ist ein Beispiel für eine solche Abgabevorrichtung. Aus dem Stand der Technik sind auch Glocken-Systeme bekannt, die ausgelegt sind die Glasur in Form eines Vorhangs, der glockenförmig ist, durch Giessen abzugeben.

Die länglichen Schlitzdüsen können Flachstrahldüsen sein.

In einer besonders bevorzugten Ausführungsform des erfindungsgemässen Verfahrens wird nach dem Ausbilden der deckenden Glasur- oder Engobe- oder Smaltobeschicht ein vorgegebenes ein- oder mehrfarbiges Bildmotiv auf die Oberfläche der deckenden Glasur- oder Engobe- oder Smaltobeschicht mit einer Applikationsvorrichtung, die vorzugsweise ein Tintenstrahldrucker ist, aufgebracht. Die Applikationsvorrichtung kann ein zweiter Tintenstrahldrucker sein, wobei in diesem Fall das Aufbringen des vorgegebenen ein- oder mehrfarbigen Bildmotivs auf die Oberfläche der deckenden Glasur- oder Engobe- oder Smaltobeschicht erfolgt, indem Tropfen einer oder mehrerer Tintenstrahldrucktinten mit jeweils anorganischen Pigmenten abgegeben werden.

Von Vorteil ist diese Weiterbildung, da dadurch Farbgleichheit an mit derselben Farbe bedruckten Stellen der Oberfläche nach dem Brennen erzielt werden kann. Demgegenüber hat das Bedrucken von Stellen der ersten Glasurschicht und von Teilen der Oberfläche, die nicht mit der ersten Glasurschicht bedeckt sind, mit derselben Farbe in der Regel zur Folge, dass sich unterschiedliche Färbungen nach dem Brennen ausbilden.

Das Einengen durch Absorption der flüssigen Bestandteile der ersten Glasursuspension kann durch die in Kontakt stehende Schicht oder Oberfläche und/oder durch Trocknung der ersten Glasursuspension erfolgen.

Gemäss einer bevorzugten Ausführungsform werden die keramischen Druckmedien vor dem Abgeben von Tropfen der ersten Glasursuspension gemäß Schritt (b) auf eine Temperatur zwischen 20°C und 120°C gebracht, vorzugsweise zwischen 50°C und 120°C, wobei das Abgeben der Tropfen gemäß Schritt (b) auf den Teil der Oberfläche erfolgt während das keramische Druckmedium eine entsprechende Temperatur zwischen 20°C und 120°C, vorzugsweise zwischen 50°C und 120°C aufweist.

Gemäss einer besonders bevorzugten Ausführungsform des erfindungsgemässen Verfahrens umfasst dieses den zusätzlichen Schritt:
- Auftragen von trockenem keramischem Material in Form von Partikeln zumindest auf die abgegebene erste Glasursuspension und Fixieren des Materials durch die erste Glasursuspension, wobei folgend nicht fixiertes keramisches Material entfernt wird, sodass Erhebungen des reliefartigen Dekors gebildet werden.

Von Vorteil ist diese Weiterbildung, da dadurch einerseits ein reliefartiges Dekor mit einer ausgeprägteren, höheren Strukturhöhe und andererseits ein rascheres Einengen der Tropfen durch Absorption des aufgetragenen keramischen Materials durch die erste Glasurschicht erfolgt. Von Nachteil hingegen ist, dass beim Entfernen des nicht fixierten keramischen Materials sich jedoch meist nicht vermeiden lässt, dass auch in sehr geringem Maße Partikel vom Teil der Oberfläche mitentfernt werden, auf dem die erste Glasur aufgetragen wurde, sodass sich eine unregelmäßige Oberfläche des reliefartigen Dekors bilden kann.

Diesem Problem kann jedoch Abhilfe verschafft werden, wenn die deckende Glasur- oder Engobe- oder Smaltobeschicht auf die Schicht aus dem keramischen Material aufgetragen wird.

Das Entfernen des nicht fixierten keramischen Materials kann beispielsweise mit einer Absaugvorrichtung oder einer Abblasvorrichtung erfolgen.

Gemäß einer weiteren Ausführungsform des Verfahrens wird auf dem aufgetragenen Bildmotiv eine Schutzschicht umfassend eine Fritte, die nach dem Einbrennen durchsichtig wird, aufgetragen.

Gemäß einer besonders bevorzugten Ausführungsform des erfindungsgemässen Verfahrens wird die erste Glasurschicht in solchen Mengen aufgetragen, dass die dadurch eingeengten ausgebildeten Erhebungen eine Höhe in einem Bereich zwischen von 70 bis 1000 µm aufweisen, vorzugsweise eine Höhe in einem Bereich zwischen von 150 bis 1000 µm aufweisen.

Als erste Glasursuspension kann beispielsweise eine Glasursuspension verwendet werden, umfassend Wasser, zumindest eine nicht-wässrige polare Flüssigkeit, ein zumindest eine Fritte, und vorzugsweise ein Flussmittel, enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) ≤ 50 µm und von 50 µm ≤ d100(v) ≤ 100 µm aufweist.

Als deckende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel wenigstens einer Partikelgrößenpopulation enthält, wobei deren Partikel ≥45 µm zwischen 0 und 7 Gew% des Gesamtgewicht des Glasur- oder Engobematerial ausmachen.

Als grundierende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel einer Partikelgrößenpopulation enthält, wobei deren Partikel ≥45 µm zwischen 0 und 7 Gew% des Gesamtgewicht des Glasur- oder Engobematerial ausmachen.

Gemäß einer besonders bevorzugten Ausführungsform des Verfahrens enthalten das Glasurmaterial der ersten Glasursuspension und das Glasurmaterial der deckenden Glasursuspension Partikel wenigstens zweier voneinander unterschiedlicher Partikelgrößenpopulationen, wobei das Glasurmaterial der deckenden Glasursuspension Partikel einer Partikelgrößenpopulation enthält, die einen volumetrischen Durchmesser der Partikelgrösse von d100(v) aufweist und der größer ist als der volumetrische Durchmesser der Partikelgrösse der entsprechenden Population des das Glasurmaterials der ersten Glasursuspension.

Von Vorteil ist diese Weiterbildung, da dadurch eine erhöhte Prozesssicherheit beim Einbrennvorgang erzielt werden kann. Diese erfindungsgemäße Kombination der Glasuren verhalten sich so, dass reliefartige Dekore in kürzerer Zeit defektlos hergestellt werden können, als wenn nur die erste Glasurschicht unter denselben Brennbedingungen gebrannt werden würde.

Gemäß einer besonders bevorzugten Ausführungsform des Verfahrens wird der erste Tintenstrahldrucker als Tintenstrahldrucker mittels Stössel betriebener Tintenstrahldruckköpfe bereitgestellt.

Mit dem Verfahren lässt sich ein gebranntes keramisches Druckmedium herstellen.

Ein nicht beanspruchtes gebranntes mit einem reliefartigen Dekor versehenes keramisches Druckmedium umfasst auf einen Teil seiner Oberfläche eine erste Glasurschicht mit Erhebungen, bei dem die Erhebungen der ersten Glasurschicht mit jeweils im Wesentlichen flacher Oberfläche oder flacher Oberflächen ausbildet sind, und wobei das Druckmedium eine deckende Glasur- oder Engobe- oder Smaltobeschicht auf der ersten Glasurschicht und/oder auf Teile der Oberfläche umfasst, die nicht mit der ersten Glasurschicht bedeckt sind aber zumindest an die erste Glasurschicht angrenzen, wobei die deckende Glasur- oder Engobe- oder Smaltobeschicht besonders bevorzugt einen Teil oder die gesamte Oberfläche, d.h. sowohl mit erster Glasurschicht bedeckte als auch nicht bedeckte Teile des keramischen Druckmediums, bedeckt.

Gemäß einer bevorzugten Ausführungsform umfasst das Druckmedium zwischen der ersten Glasurschicht und seiner Oberfläche eine grundierende Glasur- oder Engobe- oder Smaltobeschicht.

Gemäß einer weiteren bevorzugten Ausführungsform des Druckmedium ist auf der deckenden Glasur- oder Engobe- oder Smaltobeschicht ein ein- oder mehrfarbiges Motiv ausgebildet, welches vorzugsweise aus anorganischen Pigmenten gebildet ist.

Gemäss einer besonders bevorzugten Ausführungsform des Druckmediums ist zwischen der ersten Glasurschicht und der deckenden Glasur- oder Engobe- oder Smaltobeschicht eine Schicht aus keramischem Material zur Strukturerhöhung der Erhebungen der ersten Glasurschicht ausgebildet.

Gemäss einer bevorzugten Ausführungsform des dritter nicht beanspruchten Aspekts ist das Fluid ein gasförmiges Fluid, vorzugsweise ein Gas oder ein Gasgemisch, besonders bevorzugt Luft.

Gemäss einer weiteren bevorzugten Ausführungsform des dritten nicht beanspruchten Aspekts wird der zumindest eine kontinuierliche Fluidstrom in Form eines Luftmessers gegen die Oberfläche des Druckmediums, auf die die Tropfen aufgebracht wurden, gerichtet, während dessen vorzugsweise sich der Fluidstrom und das Druckmedium relativ zueinander bewegen.

## Patentansprüche

1. Verfahren zum Erzeugen eines reliefartigen Dekors auf einer Oberfläche eines keramischen Druckmediums (101), umfassend die Schritte:
a) Bereitstellen eines keramischen Druckmediums (101);
b) Abgeben von Tropfen einer ersten Glasursuspension, die zumindest eine Fritte enthaltendes Glasurmaterial (111) in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial halbzylinderförmige Erhebungen ausbildet, wobei während des Abgebens der Tropfen eine kontinuierliche unidirektionale Relativbewegung zwischen den Düsen und dem Druckmedium (101) erfolgt;
c) Brennen des keramischen Druckmediums (101), um ein eingebranntes reliefartiges Dekor auf der Oberfläche des Druckmediums (101) zu erzeugen;
wobei die Abgabe und das Einengen der Tropfen in Schritt (b) dergestalt erfolgen, dass eine erste Glasurschicht (105) mit unmittelbar benachbarten halbzylinderförmigen Erhebungen mit jeweils einer Grundfläche (109, 109', 109", 109‴, 109ʺʺ) und Mantelfläche (107, 107', 107", 107‴, 107"") ausgebildet wird, deren jeweilige Längsachse sich in eine erste Richtung erstreckt, **dadurch gekennzeichnet, dass** deren Grundflächen (109, 109', 109", 109‴, 109"") und deren Mantelflächen (107, 107', 107", 107‴, 107"") miteinander teilflächig überlappen.

2. Verfahren nach Anspruch 1 **dadurch gekennzeichnet, dass** in Schritt (b) bei der unidirektionale Relativbewegung das Druckmedium (101) in eine Transportrichtung transportiert wird, wobei vorzugsweise die erste Richtung die Transportrichtung des Druckmediums (101) ist, sodass die Abgabe und das Einengen der Tropfen in Schritt (b) dergestalt erfolgen, dass eine erste Glasurschicht mit unmittelbar benachbarten halbzylinderförmigen Erhebungen mit jeweils einer Grundfläche und Mantelfläche ausgebildet wird, deren jeweilige Längsachse sich in die Transportrichtung erstreckt, wobei deren Grundflächen und deren Mantelflächen miteinander teilflächig überlappen.

3. Verfahren nach Anspruch 1 oder 2 **dadurch gekennzeichnet, dass** eine zweite Glasursuspension oder Engobe in Form einer Suspension auf die erste Glasurschicht und auf Teile der Oberfläche, die nicht mit der ersten Glasurschicht bedeckt sind aber zumindest mit der ersten Glasurschicht angrenzen, vorzugsweise auf die gesamte mit der ersten Glasurschicht bedeckten und nicht bedeckten Oberfläche des keramischen Druckmediums (101), mit einer ersten Abgabevorrichtung durch Besprühen derselben auf die entsprechenden Oberflächen aufgetragen und dann eingeengt wird, dergestalt, dass die zweite Glasursuspension eine vollflächige Abdeckschicht ausbildet.

4. Verfahren nach einem der Ansprüche 1 bis 3 **dadurch gekennzeichnet, dass** vor der Ausbildung der ersten Glasurschicht gemäß Schritt (b) eine grundierende Glasur oder Engobe, jeweils in Form einer Suspension, auf zumindest einem Teil, vorzugsweise auf die gesamte Oberfläche des Druckmediums (101) durch Besprühen derselben vorzugsweise mit einer zweiten Abgabevorrichtung aufgetragen wird, dergestalt, dass sie eine Grundierungsschicht ausbildet.

5. Verfahren nach Anspruch 3 **dadurch gekennzeichnet, dass** die erste Abgabevorrichtung Sprühdüsen umfasst, über die die zweite Glasursuspension oder die erste Engobe in Form einer Suspension auf die entsprechenden Oberflächen abgegeben wird.

6. Verfahren nach Anspruch 4 oder 5 **dadurch gekennzeichnet, dass** die zweite Abgabevorrichtung Sprühdüsen umfasst, über die die grundierende Glasursuspension oder die Engobe in Form einer Suspension auf die entsprechenden Oberflächen abgegeben wird.

7. Verfahren nach zumindest einem der Ansprüche 3 bis 6 **dadurch gekennzeichnet, dass** nach dem Ausbilden der zweiten Glasurschicht ein vorgegebenes ein- oder mehrfarbiges Bildmotiv auf die Oberfläche der zweiten Glasurschicht mit einer Applikationsvorrichtung, die vorzugsweise ein Tintenstrahldrucker ist, aufgebracht wird.

8. Verfahren nach zumindest einem der vorhergehenden Ansprüche **dadurch gekennzeichnet, dass** Einengen durch Absorption der flüssigen Bestandteile der ersten Glasursuspension durch die in Kontakt stehende Schicht oder Oberfläche und/oder durch Trocknung der ersten Glasursuspension erfolgt.

9. Verfahren nach zumindest einem der vorhergehenden Ansprüche **dadurch gekennzeichnet, dass** nach dem Auftragen der ersten Glasursuspension und vor dem Einengen derselben gemäß Schritt (b) die Schritte umfasst:
- Vollflächiges Auftragen von trockenem keramischem Material in Form von Partikeln zumindest auf die mit der ersten Glasursuspension teilweise bedecke Oberfläche des keramischen Druckmediums (101) und vorzugsweise auf Teile der Oberfläche, die nicht mit der ersten Glasursuspension bedeckt sind, wodurch das Material vorübergehend an den mit der ersten Glasursuspension aufgedruckten Oberflächenteilen fixiert wird;
- Entfernen des nicht fixierten keramischen Materials.

10. Verfahren nach zumindest einem der vorhergehenden Ansprüche **dadurch gekennzeichnet, dass** der erste Tintenstrahldrucker als Tintenstrahldrucker mittels Stössel betriebener Tintenstrahldruckköpfe ausgebildet bereitgestellt wird.

11. Gebranntes mit einem reliefartigen Dekor versehenes keramisches Druckmedium (101) umfassend auf einen Teil seiner Oberfläche eine erste Glasurschicht mit unmittelbar benachbarten halbzylinderförmigen Erhebungen wobei die unmittelbar benachbarten halbzylinderförmigen Erhebungen mit jeweils einer Grundfläche (109, 109', 109", 109‴, 109ʺʺ) und Mantelfläche (107, 107', 107", 107‴, 107ʺʺ) ausgebildet sind, deren jeweilige Längsachse sich in eine erste Richtung erstreckt, **dadurch gekennzeichnet, dass** deren Grundflächen (109, 109', 109", 109‴, 109"") und deren Mantelflächen (107, 107', 107", 107‴, 107"") sich teilflächig überlappen.

12. Druckmedium (101) nach Anspruch 11 **dadurch gekennzeichnet, dass** das Druckmedium (101) eine zweite Glasurschicht oder eine erste Engobeschicht auf der ersten Glasurschicht und/oder auf Teilen der Oberfläche umfasst, die nicht mit der ersten Glasurschicht bedeckt sind aber zumindest an die erste Glasurschicht angrenzen, wobei die zweite Glasurschicht besonders bevorzugt gesamte Oberfläche, d.h. sowohl mit erster Glasurschicht bedeckte als auch nicht bedeckte Teile des keramischen Druckmediums bedeckt und damit eine vollflächige Abdeckschicht ausbildet.

13. Druckmedium (101) nach Anspruch 11 oder 12 **dadurch gekennzeichnet, dass** das Druckmedium zwischen der ersten Glasurschicht und seiner Oberfläche eine grundierende Glasurschicht oder eine grundierende Engobeschicht umfasst.

14. Druckmedium (101) nach zumindest einem der Ansprüche 11 bis 13 **dadurch gekennzeichnet, dass** auf der zweiten Glasurschicht eine ein- oder mehrfarbiges Motiv ausgebildet ist.

## Claims

1. A method for producing a relief decoration on a surface of a ceramic printing medium (101) comprising the steps of:
a) providing a ceramic printing medium (101);
b) dispensing droplets of a first glaze suspension comprising at least a frit-containing glaze material (111) in the form of particles, through a plurality of nozzles of a first inkjet printer onto a portion of the surface and constricting the droplets applied to the portion such that at least partially constricted glaze material forms semi-cylindrical elevations, wherein continuous unidirectional relative movement occurs between the nozzles and the printing medium (101) while dispensing the droplets;
c) firing the ceramic printing medium (101) to produce a fired relief decoration on the surface of the printing medium (101);
wherein dispensing and constricting the droplets in step (b) is performed such that a first glaze layer (105) with adjacent semi-cylindrical elevations each having a base (109, 109', 109", 109'", 109"") and a lateral surface (107, 107', 107", 107"", 107ʺʺ′) is formed, the respective longitudinal axis of which extends in a first direction, **characterized in that** the base surfaces (109, 109', 109", 109‴, 109"") of which and the lateral surfaces (107, 107', 107", 107'", 107ʺʺ) of which partially overlapping each other.

2. The method according to claim 1, **characterized in that**, in step (b), during unidirectional relative movement, the printing medium (101) is transported in a transport direction, wherein the first direction preferably is the transport direction of the printing medium (101), so that the droplets in step (b) are discharged and constricted such that a first glaze layer is formed with adjacent semi-cylindrical elevations each having a base surface and a lateral surface, the respective longitudinal axis of which extends in the transport direction, the base surfaces and the lateral surfaces of which partially overlapping each other.

3. The method according to claim 1 or 2, **characterized in that** a second glaze suspension or engobe in the form of a suspension is applied to the first glaze layer and portions of the surface which are not covered with the first glaze layer but at least are adjacent to the first glaze layer, and is preferably applied to the entire surface of the ceramic printing medium (101) covered and not covered with the first glaze layer, by spraying the same onto the respective surfaces using a first dispensing device and is then constricted such that the second glaze suspension forms a full-area covering layer.

4. The method according to one of the claims 1 to 3, **characterized in that**, prior to forming the first glaze layer according to step (b), a priming glaze or engobe, each in the form of a suspension, is applied to at least a portion, preferably to the entire surface of the printing medium (101) by spraying the same, preferably using a second dispensing device, such that it forms a priming layer.

5. The method according to claim 3, **characterized in that** the first dispensing device comprises spray nozzles through which the second glaze suspension or the first engobe is dispensed in the form of a suspension onto the respective surfaces.

6. The method according to claim 4 or 5, **characterized in that** the second dispensing device comprises spray nozzles through which the priming glaze suspension or the engobe is dispensed in the form of a suspension onto the respective surfaces.

7. The method according to at least one of the claims 3 to 6, **characterized in that**, following formation of the second glaze layer, a predetermined mono- or multicolored picture motif is applied to the surface of the second glaze layer using an application device, which preferably is an inkjet printer.

8. The method according to at least one of the preceding claims, **characterized in that** constriction is done **in that** the liquid constituents of the first glaze suspension are absorbed by the contacting layer or surface, and/or by drying the first glaze suspension.

9. The method according to at least one of the preceding claims, **characterized in that**, following application of the first glaze suspension and prior to being constricted according to step (a), it comprises the steps of:
- full-area application of dry ceramic material in the form of particles at least to the surface of the ceramic printing medium (101) partially covered with the first glaze suspension and preferably to portions of the surface which are not covered with the first glaze suspension, thereby temporarily fixing the material to the surface portions printed with the first glaze suspension;
- removal of the non-fixed ceramic material.

10. The method according to at least one of the preceding claims, **characterized in that** the first ink jet printer is provided as an ink jet printer being formed by ink jet printing heads operated by tappets.

11. A fired ceramic printing medium (101) provided with a relief-like decoration, comprising a first glaze layer with adjacent semi-cylindrical elevations on a portion of surface thereof, wherein the adjacent semi-cylindrical elevations each comprise a base surface (109, 109', 109", 109‴, 109ʺʺ) and lateral surface (107, 107', 107", 107"", 107ʺʺ′), the respective longitudinal axis of which extends in a first direction, **characterized in that** the base surfaces (109, 109', 109", 109‴, 109ʺʺ) and lateral surfaces (107, 107', 107"', 107ʺʺ′) thereof partially overlapping each another.

12. The printing medium (101) according to claim 11, **characterized in that** the printing medium (101) comprises a second glaze layer or a first engobe layer on the first glaze layer and/or on portions of the surface which are not covered with the first glaze layer but are at least adjacent to the first glaze layer, the second glaze layer particularly preferably covering the entire surface, i.e. both portions of the ceramic printing medium which are covered with the first glaze layer and portions of the ceramic printing medium which are not covered, thus forming a full-area covering layer.

13. The printing medium (101) according to claim 11 or 12, **characterized in that** the printing medium comprises a glaze priming layer or a engobe priming layer between the first glaze layer and its surface.

14. The printing medium (101) according to at least one of the claims 11 to 13, **characterized in that** a mono- or multicolored motif is formed on the second glaze layer.

## Revendications

1. Un procédé de production d'une décoration en relief sur une surface d'un support d'impression céramique (101) comprenant les étapes suivantes:
a) fourniture d'un support d'impression céramique (101) ;
b) distribution de gouttes d'une première suspension de glaçure comprenant au moins un matériau de glaçure contenant un fritt (111) sous forme de particules, à travers une pluralité de buses d'une première imprimante à jet d'encre sur une partie de la surface et contraction des gouttes appliquées sur la partie de telle sorte qu'une matière de glaçure partiellement contractée forme des élévations semi-cylindriques, un mouvement relatif unidirectionnel continu se produisant entre les buses et le support d'impression (101) lors de la distribution des gouttes ;
c) cuisson du support d'impression céramique (101) pour produire une décoration en relief cuite sur la surface du support d'impression (101) ;
où la distribution et la contraction des gouttes à l'étape (b) sont réalisées de telle sorte qu'une première couche de glaçure (105) avec des élévations semi-cylindriques adjacentes ayant chacune une base (109, 109', 109", 109'", 109"") et une surface latérale (107, 107', 107", 107"", 107ʺʺ) est formée, dont l'axe longitudinal respectif s'étend dans une première direction, **caractérisée en ce que** les surfaces de base (109, 109', 109", 109'", 109"") et les surfaces latérales (107, 107', 107", 107'", 107ʺʺ) se chevauchent partiellement.

2. Le procédé selon la revendication 1, **caractérisé en ce que**, à l'étape (b), pendant le mouvement relatif unidirectionnel, le support d'impression (101) est transporté dans une direction de transport, la première direction étant de préférence la direction de transport du support d'impression (101), de sorte que les gouttes à l'étape (b) sont éjectées et contractées de telle sorte qu'une première couche de glaçure est formée avec des élévations semi-cylindriques adjacentes ayant chacune une surface de base et une surface latérale, dont l'axe longitudinal respectif s'étend dans la direction de transport, les surfaces de base et les surfaces latérales se chevauchant partiellement.

3. Le procédé selon la revendication 1 ou 2, **caractérisé en ce qu'**une deuxième suspension de glaçure ou d'engobe sous forme de suspension est appliquée sur la première couche de glaçure et des parties de la surface qui ne sont pas recouvertes par la première couche de glaçure mais qui sont au moins adjacentes à la première couche de glaçure, et est de préférence appliquée sur toute la surface du support d'impression céramique (101) recouverte et non recouverte par la première couche de glaçure, en la pulvérisant sur les surfaces respectives à l'aide d'un premier dispositif de distribution et est ensuite contractée de telle sorte que la deuxième suspension de glaçure forme une couche de recouvrement sur toute la surface.

4. Le procédé selon l'une quelconque des revendications 1 à 3, **caractérisé en ce que**, avant de former la première couche de glaçure selon l'étape (b), une glaçure d'apprêt ou un engobe, chacun sous forme de suspension, est appliqué sur au moins une partie, de préférence sur toute la surface du support d'impression (101) en vaporisant, de préférence à l'aide d'un deuxième dispositif de distribution, de telle sorte qu'il forme une couche d'apprêt.

5. Le procédé selon la revendication 3, **caractérisé en ce que** le premier dispositif de distribution comprend des buses de vaporisation à travers lesquelles la deuxième suspension de glaçure ou le premier engobe est distribué sous forme de suspension sur les surfaces respectives.

6. Le procédé selon la revendication 4 ou 5, **caractérisé en ce que** le deuxième dispositif de distribution comprend des buses de vaporisation à travers lesquelles la suspension de glaçure d'apprêt ou l'engobe est distribué sous forme de suspension sur les surfaces respectives.

7. Le procédé selon au moins l'une des revendications 3 à 6, **caractérisé en ce que**, après la formation de la deuxième couche de glaçure, un motif d'image mono- ou multicolore prédéterminé est appliqué sur la surface de la deuxième couche de glaçure à l'aide d'un dispositif d'application, qui est de préférence une imprimante à jet d'encre.

8. Le procédé selon au moins l'une des revendications précédentes, **caractérisé en ce que** la contraction est effectuée de telle sorte que les constituants liquides de la première suspension de glaçure sont absorbés par la couche ou la surface en contact, et/ou par séchage de la première suspension de glaçure.

9. Le procédé selon au moins l'une des revendications précédentes, **caractérisé en ce que**, après l'application de la première suspension de glaçure et avant d'être contractée selon l'étape (a), il comprend les étapes suivantes :
• application sur toute la surface de matériau céramique sec sous forme de particules au moins sur la surface du support d'impression céramique (101) partiellement recouverte de la première suspension de glaçure et de préférence sur des parties de la surface qui ne sont pas recouvertes par la première suspension de glaçure, fixant ainsi temporairement le matériau aux parties de surface imprimées avec la première suspension de glaçure ;
• enlèvement du matériau céramique non fixé.

10. Le procédé selon au moins l'une des revendications précédentes, **caractérisé en ce que** la première imprimante à jet d'encre est réalisée sous la forme d'une imprimante à jet d'encre formée par des têtes d'impression à jet d'encre actionnées par des tiges de poussée.

11. Un support d'impression céramique cuit (101) pourvu d'une décoration en relief, comprenant une première couche de glaçure avec des élévations semi-cylindriques adjacentes sur une partie de sa surface, les élévations semi-cylindriques adjacentes comprenant chacune une surface de base (109, 109', 109", 109‴, 109ʺʺ) et une surface latérale (107, 107', 107", 107ʺʺ, 107ʺʺ′), dont l'axe longitudinal respectif s'étend dans une première direction, **caractérisée en ce que** les surfaces de base (109, 109', 109", 109‴, 109ʺʺ) et les surfaces latérales (107, 107', 107‴, 107ʺʺ′) se chevauchent partiellement.

12. Le support d'impression (101) selon la revendication 11, **caractérisé en ce que** le support d'impression (101) comprend une deuxième couche de glaçure ou une première couche d'engobe sur la première couche de glaçure et/ou sur des parties de la surface qui ne sont pas recouvertes par la première couche de glaçure mais qui sont au moins adjacentes à la première couche de glaçure, la deuxième couche de glaçure recouvrant particulièrement préférablement toute la surface, c'est-à-dire à la fois les parties du support d'impression céramique qui sont recouvertes par la première couche de glaçure et les parties du support d'impression céramique qui ne sont pas recouvertes, formant ainsi une couche de recouvrement sur toute la surface.

13. Le support d'impression (101) selon la revendication 11 ou 12, **caractérisé en ce que** le support d'impression comprend une couche d'apprêt en glaçure ou une couche d'apprêt en engobe entre la première couche de glaçure et sa surface.

14. Le support d'impression (101) selon au moins l'une des revendications 11 à 13, **caractérisé en ce qu'**un motif mono- ou multicolore est formé sur la deuxième couche de glaçure.
